# EUROPEAN PATENT SPECIFICATION

(11) **EP 3 647 191 B1**
(45) Date of publication and mention of the grant of the patent: **14.04.2021**
(21) Application number: 18212490.9
(22) Date of filing: 13.12.2018
(51) Int. Cl.: B64C 27/82, B63H 1/14, B64C 27/46, B64C 27/467

(54) **BIDIRECTIONAL AIRCRAFT ROTOR**
BIDIREKTIONALER FLUGZEUGROTOR
ROTOR D'AÉRONEF BIDIRECTIONNEL

(30) Priority: 01.11.2018 US 201816178349
(43) Date of publication of application: 06.05.2020
(73) Proprietor: Bell Helicopter Textron Inc., Fort Worth, TX 76101 (US)
(72) Inventor: Acee, Aaron Alexander, Flower Mound, TX 75022 (US); Haldeman, Andrew Paul, Fort Worth, TX 76102 (US)
(74) Representative: Barker Brettell LLP

(56) References cited:
- EP-A1- 0 642 437
- EP-A1- 3 254 962
- FR-A- 411 538
- GB-A- 296 717
- US-A- 2 027 647
- US-A- 2 408 788
- US-A- 2 609 055
- US-A- 4 966 526
- US-A1- 2007 231 148

## Description

### Background

Conventional rotorcraft feature rotor systems that spin in a single direction. Rotor systems that rotate a single direction utilize rotor blades, or airfoils, specifically configured for a chordwise airstream passing over the rotor blades in a single direction. Conventional rotor blades typically feature a maximum thickness offset closer to a leading edge than the trailing edge, such as between a leading edge of the blade and about one-third of a chord length of the blade nearest the leading edge. The offset maximum thickness and/or camber of conventional airfoils is optimized to generate lift as the airfoil is rotated in a single "normal" direction. Conventional rotors typically operate at a relatively constant RPM and are pitch controlled, wherein their blades are rotated about a spanwise pitch axis to vary the amount of lift generated by the blades.

FR 411 538 A discloses a propeller applicable to air navigation. The propeller comprises blades each with a characteristic shape promoting the concentration of air to allow the propeller to render its useful effect on an air cylinder instead of a cone as happens with other propellers.

US 4 966 526 A discloses a circulation control rotor system for aircraft in which compressed air is directly supplied at generally constant pressure to plenums in the rotor blades and discharged through area controlled slots, the area controlling means involving camming surfaces and being actuated by cyclic, collective, aircraft vibration and flight stability inputs.

EP 0 642 437 A1 discloses a propeller, in particular for a ship, that has blades each of which is pivotally arranged in the hub of the propeller so that the blade is capable of pivoting to and fro in an axial plane between forward and rearward positions.

US 2 609 055 A discloses a fan or propeller adapted for reversible operation for selectively moving a gas, such as air in one direction or the other.

US 2 408 788 discloses an airfoil and particularly the provision of rotatable airfoils by which fluid flow control relative to the airfoils is established for the normal high speed ranges, including supersonic.

EP 3 254 962 A1 discloses an electric distributed propulsion for anti-torque modules for a helicopter and methods of use.

### Summary

According to the present disclosure, there is provided a rotorcraft according to claim 1 and a method according to claim 8. Optional features of the rotorcraft and method are set out in the dependent claims.

### Brief Description of the Drawings

Figure 1 is a side view of a rotorcraft according to this disclosure.
Figure 2 is an end view of a bidirectional rotor blade according to this disclosure.
Figure 3 is an end view of a bidirectional rotor blade not falling within the scope of the claimed invention.
Figure 4 is a side view of another rotorcraft according to this disclosure.
Figure 5 is a partial side view of a tail boom comprising rotors according to this disclosure.
Figure 6 is a partial side view of another tail boom comprising rotors according to this disclosure.
Figure 7 is a partial side view of another tail boom comprising rotors according to this disclosure.

### Detailed Description

In this disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

This disclosure describes a rotorcraft having rotors that can change a direction of their rotation and are utilized on rotor systems that vary RPM of the rotor. Changing the direction of a rotor's rotation requires rotor blades that are configured for relatively efficient operation in both directions. The bidirectional rotor blades feature a leading edge along with a trailing edge that are mirrors of each other along a median of the rotor blade. A profile of the leading edge of the rotor blade is identical to a profile of the trailing edge of the rotor blade.

A bidirectional rotor system will have to provide thrust when operated in both the forward direction, with a leading edge leading, and the negative direction, with the trailing edge leading, and an airfoil with a relatively sharp leading edge and a rounded trailing edge will provide lesser flow separation in both rotational directions. Bidirectional rotor systems also present a challenge in requiring the rotor to stop and change directions, but RPM-controlled rotors are typically designed to have reduced chord length and inertia.

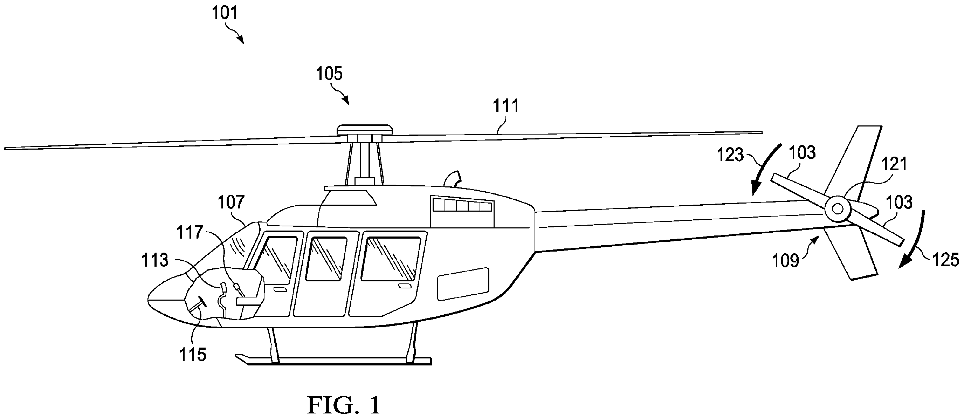

Figure 1 illustrates a rotorcraft 101 equipped with a bidirectional rotor blade 103 according to this disclosure. Rotorcraft 101 comprises a main rotor system 105 carried by a fuselage 107 and a tail rotor system 109 carried by the fuselage 107. One or more main-rotor blades 111 operably associated with main rotor system 105 provide lift for rotorcraft 101 and are controlled with a plurality of control sticks within the fuselage 107. For example, during flight a pilot can manipulate cyclic stick 113 to cyclically change the pitch angle of main rotor blades 111, thus providing lateral and longitudinal flight direction, and/or manipulate pedals 115 for controlling yaw direction with varied RPM and rotational direction of the tail rotor system. Furthermore, the pilot can adjust the collective stick 117 to collectively change the pitch angles of all the main-rotor blades 111.

Tail rotor system 109 utilizes a bidirectional aircraft rotor blade 103 having a fixed pitch and configured for producing a yaw moment of a selected magnitude and a selective direction. Because the bidirectional aircraft rotor blade 103 is fixed in pitch, the RPM and the direction of rotation are varied by manipulation of the pedals 115 to vary the magnitude and direction of the yaw moment. Rotorcraft 101 features a torque source, such as an engine or electric motor, driving the main rotor system 105 along with the tail rotor system 109. Tail rotor system 109 can be rotationally coupled to a transmission comprising a clutch that enables the tail rotor system 109 to both vary the RPM and the rotational direction of the tail rotor system 109. Alternatively, the tail rotor system 109 is driven by a dedicated bidirectional electric motor. In either case, the bidirectional aircraft rotor blade 103 is affixed to a hub 121.

The bidirectional aircraft rotor blade 103 is comprised of a leading edge that is identical to a trailing edge, both having identical rounded edge profiles. Furthermore, the bidirectional aircraft rotor blade 103 is comprised of an upper surface having a greater upper camber as compared to a lower camber of the lower surface. The combination of the camber and fixed pitch make the bidirectional rotor blade 103 efficient in a forward direction 123, but results in the bidirectional aircraft rotor blade 103 being less efficient in a reverse direction 125.

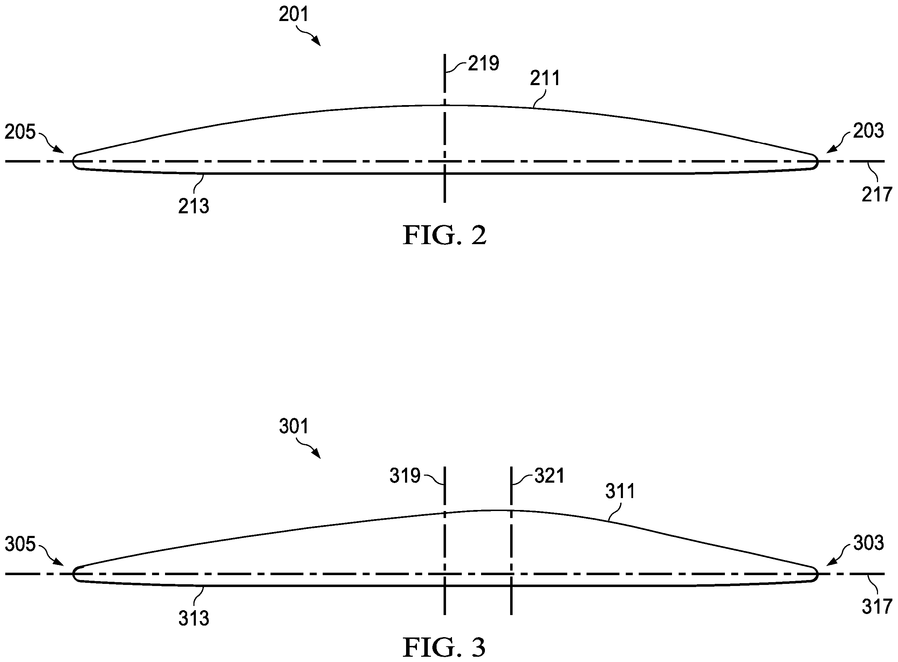

Figure 2 illustrates a bidirectional aircraft rotor blade 201 for a rotorcraft. Rotor blade 201 is comprised of a leading edge 203, a trailing edge 205, an upper surface 211, and a lower surface 213. Chord axis 217 connects the leading edge 203 and the trailing edge 205. The median axis 219 is located midway along the chord axis between the leading edge 203 and the trailing edge 205. The upper surface 211 connects the leading edge 203 to the trailing edge 205, and the lower surface 213 connects the leading edge 203 to the trailing edge 205.

A thickness of the rotor blade 201 is at its maximum at the median axis 219. Furthermore, the leading edge 203 and the trailing edge 205 are identical in profile shape, and the rotor blade 201 is mirrored about the median axis. Placing the maximum thickness position at 50% of the chord length makes the rotor blade symmetric about the median axis 219, which provides reverse direction performance. In a preferred embodiment, the lower camber is at or below 2% to help reverse direction performance.

Figure 3 illustrates an example implementation of a bidirectional aircraft rotor blade 301 for a rotorcraft, not falling within the scope of the claimed invention. Rotor blade 301 is comprised of a leading edge 303, a trailing edge 305, an upper surface 311, and a lower surface 313. Chord axis 317 connects the leading edge 303 and the trailing edge 305. A median axis 319 is located midway between the leading edge 303 and the trailing edge 305. The upper surface 311 connects the leading edge 303 to the trailing edge 305, and the lower surface 313 connects the leading edge 303 to the trailing edge 305.

A maximum thickness axis 321 is located where a thickness of the rotor blade 301 is at a maximum, and the axis 321 is located a distance away from the median axis 319, resulting in the rotor blade 301 being non-symmetric about the median axis 319. The leading edge 303 and the trailing edge 305 are identical in profile shape.

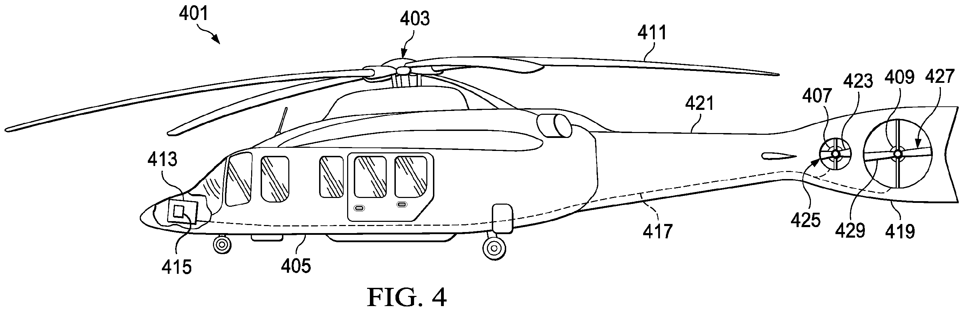

Figure 4 illustrates a rotorcraft 401 equipped with two bidirectional rotor systems according to this disclosure. Rotorcraft 401 comprises a main rotor system 403 carried by a fuselage 405, a first tail rotor system 407, and a second tail rotor system 409. One or more main-rotor blades 411 operably associated with main rotor system 403 provide lift for rotorcraft 401 and are controlled with a flight control computer 413 having a tail rotor controller 415. For example, during flight a pilot can manipulate a cyclic stick to cyclically change the pitch angle of main rotor blades 411, thus providing lateral and longitudinal flight direction, and/or manipulate pedals for controlling yaw direction by varying the RPM and reversing the direction of the first and second tail rotor systems 407, 409. The pilot can adjust a collective stick to collectively change the pitch angles of all of the main rotor blades 411.

The flight control computer 413 and the tail rotor controller 415 are wired 417 to the first tail rotor system 407 and wired to the second tail rotor system 409. Both the first tail rotor system 407 the second tail rotor system 409 are in the tail rotor assembly 419. The tail rotor assembly 419 of rotorcraft 401 is attached to the fuselage 405 of the rotorcraft 401 by tail boom 421. The first tail rotor system 407 is comprised of a first tail rotor blade 423 and a second tail rotor blade 425. The second tail rotor system 409 is comprised of a third tail rotor blade 427 and a fourth tail rotor blade 429. The flight control computer 413 can selectively adjust the RPM of each tail rotor system and the direction of rotation of each tail rotor system to produce a yaw moment of a selected magnitude and direction for varying the yaw attitude of the rotorcraft 401.

The first tail rotor system 407 is driven by a first electric motor. A pitch of the first tail rotor blade 423 and the second tail rotor blade 425 is fixed. The RPM and/or a direction of rotation of the first electric motor is varied to vary a yaw moment of the first tail rotor system 407.

The second tail rotor system 409 is driven by a second electric motor. A pitch of the third tail rotor blade 427 and the fourth tail rotor blade 429 is fixed. The RPM and/or a direction of rotation of the first electric motor is varied to vary a yaw moment of the first tail rotor system 409.

Combining the yaw moment of the first tail rotor system 407 with the yaw moment of the second tail rotor system 409 allows the pilot to quickly and efficiently yaw the aircraft. In the preferred embodiment the first tail rotor system 407 has a smaller diameter than the second tail rotor system 409. In alternative embodiments, each tail rotor system is equal in diameter or first tail rotor system 407 has a larger diameter than the second tail rotor system 409.

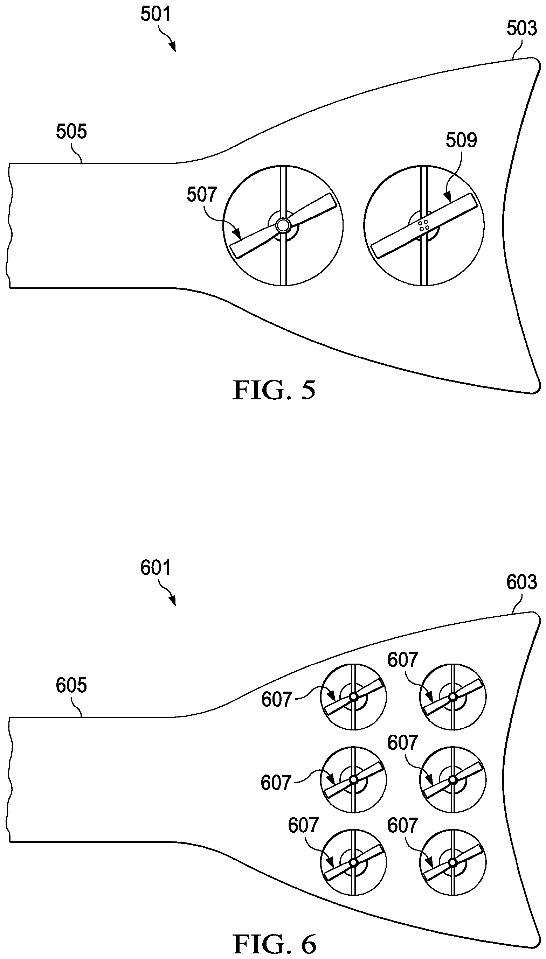

Figure 5 illustrates a rotorcraft's tail boom equipped with two tail rotors having bidirectional aircraft rotor blades according to this disclosure. Combined tail rotor system 501 is in a vertical stabilizer 503 attached to tail boom 505. Combined tail rotor system 501 is comprised of a first tail rotor system 507 and second tail rotor system 509 of equal diameter. Each tail rotor system in the combined tail rotor system 501 is fixed in pitch and features bidirectional aircraft rotor blades like those of the bidirectional aircraft rotor 301. Second tail rotor system 509 is comprised of a single blade that spans an entire length of the tail rotor system. In the preferred embodiment, the first tail rotor system 507 is controlled concurrently with the second tail rotor system 509. Alternatively, the first tail rotor system 507 is controlled independently of the second tail rotor system 509.

Figure 6 illustrates a rotorcraft's tail boom equipped with an array of tail rotors having bidirectional aircraft rotor blades according to this disclosure. Combined tail rotor system 601 is in a vertical stabilizer 603 attached to tail boom 605. Combined tail rotor system 601 is comprised of a plurality of tail rotor systems 607 having equal diameters. Each tail rotor system in the combined tail rotor system 601 is fixed in pitch and features bidirectional aircraft rotor blades like those of the bidirectional aircraft rotor 301.

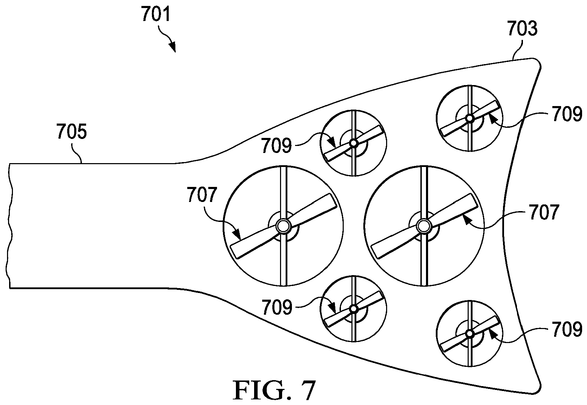

Figure 7 illustrates a rotorcraft's tail boom equipped with several tail rotors having bidirectional aircraft rotor blades according to this disclosure. Combined tail rotor system 701 is in a vertical stabilizer 703 attached to tail boom 705. Combined tail rotor system 701 is comprised of a plurality of larger tail rotor systems 707 and smaller tail rotor systems 709. Each tail rotor system 707, 709 in the combined tail rotor system 701 is fixed in pitch and features bidirectional aircraft rotor blades such as the bidirectional aircraft rotor 301. It should be apparent that tail rotor systems 707, 709 while shown as providing yaw control could be mounted horizontally to provide lift to rotorcraft.

It should be noted that the bidirectional aircraft rotor provides thrust while moving in both forward and reverse directions. The bidirectional aircraft rotor provides rotorcraft with quicker and more efficient control of yaw during flight, thereby enabling the rotorcraft to be more responsive to the pilot and the flight control system.

At least one embodiment is disclosed, and variations, combinations, and/or modifications of the embodiment(s) and/or features of the embodiment(s) made by a person having ordinary skill in the art are within the scope of this disclosure. Alternative embodiments that result from combining, integrating, and/or omitting features of the embodiment(s) are also within the scope of this disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R=Rₗ+k^{∗}(Rᵤ-Rₗ), wherein k is a variable ranging from 1 percent to 100 percent with a 1 percent increment, i.e., k is 1 percent, 2 percent, 3 percent, 4 percent, 5 percent,... 50 percent, 51 percent, 52 percent,..., 95 percent, 96 percent, 95 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow.

## Claims

1. A rotorcraft having a main rotor system comprising:
a first tail rotor system (109, 407, 409, 507, 509, 607, 707, 709) comprising:
bidirectional tail rotor blades (103, 201, 301, 423, 425, 427, 429) with a fixed pitch; and
a first torque source configured to rotate the first tail rotor system;
wherein an RPM of the torque source is variable; and
wherein a direction of rotation of the first tail rotor system is reversible in flight;
**characterised in that**:
each of the bidirectional tail rotor blades (103, 201, 301, 423, 425, 427, 429) is symmetric about a median axis (219) of the bidirectional tail rotor blade (103, 201, 301, 423, 425, 427, 429), wherein the median axis (219) is located midway along a chord axis (217) between a leading edge (203, 303) of the bidirectional tail rotor blade (103, 201, 301, 423, 425, 427, 429) and a trailing edge (205, 305) of the bidirectional tail rotor blade (103, 201, 301, 423, 425, 427, 429), and wherein a maximum thickness of each of the bidirectional rotor blades is midway between the leading edge and the trailing edge.

2. The rotorcraft of claim 1, wherein each of the bidirectional tail rotor blades (103, 201, 301, 423, 425, 427, 429) comprises an upper surface (211, 311) and a lower surface (213, 313); and
wherein the upper surface (211, 311) has a greater camber than the camber of the lower surface (213, 313).

3. The rotorcraft of claim 2, wherein:
(i) the camber of the lower surface (213, 313) is less than or equal to 2 percent; and/or
(ii) a maximum of the camber of the upper surface (211, 311) is located where the maximum thickness is located.

4. The rotorcraft of any of claims 1 to 3, wherein the torque source is an electric motor; or wherein the torque source is an engine.

5. The rotorcraft of any preceding claim, further comprising:
a second tail rotor system (109, 407, 409, 507, 509, 607, 707, 709) comprising:
bidirectional rotor blades (103, 201, 301, 423, 425, 427, 429) with a fixed pitch; and
a second torque source configured to rotate the second tail rotor system (109, 407, 409, 507, 509, 607, 707, 709);
wherein an RPM of the second torque source is variable; and
wherein a direction of rotation of the second tail rotor system (109, 407, 409, 507, 509, 607, 707, 709) is reversible in flight.

6. The rotorcraft of claim 5, wherein:-
(i) a diameter of the first tail rotor system (407, 707) is unequal to a diameter of the second tail rotor system (409, 709); or
(ii) wherein a diameter of the first tail rotor system (507, 509, 607, 707, 709) is equal to a diameter of the second tail rotor system (507, 509, 607, 707, 709).

7. The rotorcraft of claim 5 or of claim 6, further comprising:
a third tail rotor system (109, 407, 409, 507, 509, 607, 707, 709) comprising:
bidirectional rotor blades (103, 201, 301, 423, 425, 427, 429) with a fixed pitch; and
a third torque source configured to rotate the third tail rotor system (109, 407, 409, 507, 509, 607, 707, 709);
wherein the third tail rotor system (109, 407, 409, 507, 509, 607, 707, 709) is fixed in pitch;
wherein an RPM of the third tail rotor system (109, 407, 409, 507, 509, 607, 707, 709) is variable; and
wherein a direction of rotation of the third tail rotor system (109, 407, 409, 507, 509, 607, 707, 709) is reversible in flight.

8. A method of controlling a yaw moment of a tail rotor system (109, 407, 409, 507, 509, 607, 707, 709) of a rotorcraft (101, 401), comprising:
providing a first tail rotor system (109, 407, 409, 507, 509, 607, 707, 709) having:
a first hub (121); and
a first bidirectional tail rotor blade (103, 201, 301, 423, 425, 427, 429) affixed to the first hub (121) with a fixed pitch;
wherein the first bidirectional tail rotor blade (103, 201, 301, 423, 425, 427, 429) is symmetric about a median axis (219) of the first bidirectional tail rotor blade (103, 201, 301, 423, 425, 427, 429), wherein the median axis (219) is located midway along a chord axis (217) between a leading edge (203, 303) of the first bidirectional tail rotor blade (103, 201, 301, 423, 425, 427, 429) and a trailing edge (205, 305) of the first bidirectional tail rotor blade (103, 201, 301, 423, 425, 427, 429), and wherein a maximum thickness of each of the bidirectional rotor blades is midway between the leading edge and the trailing edge; and
varying an RPM of the first tail rotor system (109, 407, 409, 507, 509, 607, 707, 709).

9. The method of claim 8, further comprising:
reversing a direction of rotation of the first tail rotor system (109, 407, 409, 507, 509, 607, 707, 709).

10. The method of claim 8 or of claim 9, further comprising:
providing a second tail rotor system (109, 407, 409, 507, 509, 607, 707, 709) having:
a second hub (121); and
a second bidirectional tail rotor blade (103, 201, 301, 423, 425, 427, 429) affixed to the second hub (121) with a fixed pitch;
wherein the second bidirectional tail rotor blade (103, 201, 301, 423, 425, 427, 429) is symmetric about a median axis (219) of the second bidirectional tail rotor blade (103, 201, 301, 423, 425, 427, 429), wherein the median axis (219) is located midway along a chord axis (217) between a leading edge (203, 303) of the second bidirectional tail rotor blade (103, 201, 301, 423, 425, 427, 429) and a trailing edge (205, 305) of the second bidirectional tail rotor blade (103, 201, 301, 423, 425, 427, 429), and wherein a maximum thickness of each of the bidirectional rotor blades is midway between the leading edge and the trailing edge; and
varying an RPM of the second tail rotor system (109, 407, 409, 507, 509, 607, 707, 709).

11. The method of claim 10, further comprising:
reversing a direction of rotation of the second tail rotor system (109, 407, 409, 507, 509, 607, 707, 709).

12. The method of claim 10 or of claim 11, wherein the first tail rotor system (109, 407, 409, 507, 509, 607, 707, 709) is controlled concurrently with the second tail rotor system (109, 407, 409, 507, 509, 607, 707, 709).

13. The method of claim 10 or of claim 11, wherein the first tail rotor system (109, 407, 409, 507, 509, 607, 707, 709) is controlled independently of the second tail rotor system (109, 407, 409, 507, 509, 607, 707, 709).

## Patentansprüche

1. Drehflügler mit einem Hauptrotorsystem, der Folgendes umfasst:
ein erstes Heckrotorsystem (109, 407, 409, 507, 509, 607, 707, 709), das Folgendes umfasst:
bidirektionale Heckrotorblätter (103, 201, 301, 423, 425, 427, 429) mit einem festen Anstellwinkel und
eine erste Drehmomentquelle, die dazu ausgelegt ist, das erste Heckrotorsystem zu drehen;
wobei eine Drehzahl der Drehmomentquelle variabel ist und wobei eine Drehrichtung des ersten Heckrotorsystems während des Flugs umkehrbar ist;
**dadurch gekennzeichnet, dass**:
jedes der bidirektionalen Heckrotorblätter (103, 201, 301, 423, 425, 427, 429) um eine Mittelachse (219) des bidirektionalen Heckrotorblatts (103, 201, 301, 423, 425, 427, 429) symmetrisch ist, wobei die Mittelachse (219) entlang einer Sehnenachse (217) in der Mitte zwischen einer Vorderkante (203, 303) des bidirektionalen Heckrotorblatts (103, 201, 301, 423, 425, 427, 429) und
einer Hinterkante (205, 305) des bidirektionalen Heckrotorblatts (103, 201, 301, 423, 425, 427, 429) liegt und wobei eine maximale Dicke von jedem der bidirektionalen Rotorblätter mittig zwischen der Vorderkante und der Hinterkante liegt.

2. Drehflügler nach Anspruch 1, wobei jedes der bidirektionalen Heckrotorblätter (103, 201, 301, 423, 425, 427, 429) eine obere Fläche (211, 311) und eine untere Fläche (213, 313) umfasst und
wobei die obere Fläche (211, 311) eine größere Wölbung als die Wölbung der unteren Fläche (213, 313) aufweist.

3. Drehflügler nach Anspruch 2, wobei:
(i) die Wölbung der unteren Fläche (213, 313) kleiner als oder gleich 2 Prozent ist und/oder
(ii) ein Maximum der Wölbung der oberen Fläche (211, 311) sich dort befindet, wo sich die maximale Dicke befindet.

4. Drehflügler nach einem der Ansprüche 1 bis 3, wobei die Drehmomentquelle ein Elektromotor ist oder wobei die Drehmomentquelle ein Verbrennungsmotor ist.

5. Drehflügler nach einem der vorhergehenden Ansprüche, der ferner Folgendes umfasst:
ein zweites Heckrotorsystem (109, 407, 409, 507, 509, 607, 707, 709), das Folgendes umfasst:
bidirektionale Rotorblätter (103, 201, 301, 423, 425, 427, 429) mit einem festen Anstellwinkel und
eine zweite Drehmomentquelle, die dazu ausgelegt ist, das zweite Heckrotorsystem (109, 407, 409, 507, 509, 607, 707, 709) zu drehen;
wobei eine Drehzahl der zweiten Drehmomentquelle variabel ist und
wobei eine Drehrichtung des zweiten Heckrotorsystems (109, 407, 409, 507, 509, 607, 707, 709) während des Flugs umkehrbar ist.

6. Drehflügler nach Anspruch 5, wobei:
(i) ein Durchmesser des ersten Heckrotorsystems (407, 707) mit einem Durchmesser des zweiten Heckrotorsystems (409, 709) nicht gleich ist oder
(ii) wobei ein Durchmesser des ersten Heckrotorsystems (507, 509, 607, 707, 709) mit einem Durchmesser des zweiten Heckrotorsystems (507, 509, 607, 707, 709) gleich ist.

7. Drehflügler nach Anspruch 5 oder nach Anspruch 6, der ferner Folgendes umfasst:
ein drittes Heckrotorsystem (109, 407, 409, 507, 509, 607, 707, 709), das Folgendes umfasst:
bidirektionale Rotorblätter (103, 201, 301, 423, 425, 427, 429) mit einem festen Anstellwinkel und
eine dritte Drehmomentquelle, die dazu ausgelegt ist, das dritte Heckrotorsystem (109, 407, 409, 507, 509, 607, 707, 709) zu drehen;
wobei das dritte Heckrotorsystem (109, 407, 409, 507, 509, 607, 707, 709) einen festen Anstellwinkel aufweist; wobei eine Drehzahl des dritten Heckrotorsystems (109, 407, 409, 507, 509, 607, 707, 709) variabel ist und wobei eine Drehrichtung des dritten Heckrotorsystems (109, 407, 409, 507, 509, 607, 707, 709) während des Flugs umkehrbar ist.

8. Verfahren zum Steuern eines Giermoments eines Heckrotorsystems (109, 407, 409, 507, 509, 607, 707, 709) eines Drehflüglers (101, 401), das Folgendes umfasst:
Bereitstellen eines ersten Heckrotorsystems (109, 407, 409, 507, 509, 607, 707, 709) mit:
einer ersten Nabe (121) und
einem ersten bidirektionalen Heckrotorblatt (103, 201, 301, 423, 425, 427, 429), das an der ersten Nabe (121) befestigt ist, mit einem festen Anstellwinkel;
wobei das erste bidirektionale Heckrotorblatt (103, 201, 301, 423, 425, 427, 429) um eine Mittelachse (219) des ersten bidirektionalen Heckrotorblatts (103, 201, 301, 423, 425, 427, 429) symmetrisch ist, wobei die Mittelachse (219) entlang einer Sehnenachse (217) in der Mitte zwischen einer Vorderkante (203, 303) des ersten bidirektionalen Heckrotorblatts (103, 201, 301, 423, 425, 427, 429) und einer Hinterkante (205, 305) des ersten bidirektionalen Heckrotorblatts (103, 201, 301, 423, 425, 427, 429) liegt und wobei eine maximale Dicke von jedem der bidirektionalen Rotorblätter mittig zwischen der Vorderkante und der Hinterkante liegt; und
Variieren einer Drehzahl des ersten Heckrotorsystems (109, 407, 409, 507, 509, 607, 707, 709).

9. Verfahren nach Anspruch 8, das ferner Folgendes umfasst:
Umkehren einer Drehrichtung des ersten Heckrotorsystems (109, 407, 409, 507, 509, 607, 707, 709).

10. Verfahren nach Anspruch 8 oder nach Anspruch 9, das ferner Folgendes umfasst:
Bereitstellen eines zweiten Heckrotorsystems (109, 407, 409, 507, 509, 607, 707, 709) mit:
einer zweiten Nabe (121) und
einem zweiten bidirektionalen Heckrotorblatt (103, 201, 301, 423, 425, 427, 429), das an der zweiten Nabe (121) befestigt ist, mit einem festen Anstellwinkel;
wobei das zweite bidirektionale Heckrotorblatt (103, 201, 301, 423, 425, 427, 429) um eine Mittelachse (219) des zweiten bidirektionalen Heckrotorblatts (103, 201, 301, 423, 425, 427, 429) symmetrisch ist, wobei die Mittelachse (219) entlang einer Sehnenachse (217) in der Mitte zwischen einer Vorderkante (203, 303) des zweiten bidirektionalen Heckrotorblatts (103, 201, 301, 423, 425, 427, 429) und einer Hinterkante (205, 305) des zweiten bidirektionalen Heckrotorblatts (103, 201, 301, 423, 425, 427, 429) liegt und wobei eine maximale Dicke von jedem der bidirektionalen Rotorblätter mittig zwischen der Vorderkante und der Hinterkante liegt; und
Variieren einer Drehzahl des zweiten Heckrotorsystems (109, 407, 409, 507, 509, 607, 707, 709).

11. Verfahren nach Anspruch 10, das ferner Folgendes umfasst:
Umkehren einer Drehrichtung des zweiten Heckrotorsystems (109, 407, 409, 507, 509, 607, 707, 709).

12. Verfahren nach Anspruch 10 oder nach Anspruch 11, wobei das erste Heckrotorsystem (109, 407, 409, 507, 509, 607, 707, 709) gleichzeitig mit dem zweiten Heckrotorsystem (109, 407, 409, 507, 509, 607, 707, 709) gesteuert wird.

13. Verfahren nach Anspruch 10 oder nach Anspruch 11, wobei das erste Heckrotorsystem (109, 407, 409, 507, 509, 607, 707, 709) unabhängig vom zweiten Heckrotorsystem (109, 407, 409, 507, 509, 607, 707, 709) gesteuert wird.

## Revendications

1. Giravion ayant un système de rotor principal comprenant :
un premier système de rotor de queue (109, 407, 409, 507, 509, 607, 707, 709) comprenant :
des pales de rotor de queue bidirectionnelles (103, 201, 301, 423, 425, 427, 429) avec un pas fixe; et
une première source de couple configurée pour faire tourner le premier système de rotor de queue ;
dans lequel une vitesse de rotation de la source de couple est variable ; et
dans lequel une direction de rotation du premier système de rotor de queue peut être inversée en vol ;
**caractérisé en ce que** :
chacune des pales de rotor de queue bidirectionnelles (103, 201, 301, 423, 425, 427, 429) est symétrique autour d'un axe médian (219) de la pale de rotor de queue bidirectionnelle (103, 201, 301, 423, 425, 427, 429),
l'axe médian (219) étant situé à mi-chemin le long d'un axe de corde (217) entre un bord d'attaque (203, 303) de la pale de rotor de queue bidirectionnelle (103, 201, 301, 423, 425, 427, 429) et un bord de fuite (205, 305) de la pale de rotor de queue bidirectionnelle (103, 201, 301, 423, 425, 427, 429), et une épaisseur maximale de chacune des pales de rotor bidirectionnelles étant à mi-chemin entre le bord d'attaque et le bord de fuite.

2. Giravion de la revendication 1, dans lequel chacune des pales de rotor de queue bidirectionnelles (103, 201, 301, 423, 425, 427, 429) comprend une surface supérieure (211, 311) et une surface inférieure (213, 313) ; et dans lequel la surface supérieure (211, 311) a une cambrure plus forte que la cambrure de la surface inférieure (213, 313).

3. Giravion de la revendication 2, dans lequel :
(i) la cambrure de la surface inférieure (213, 313) est inférieure ou égale à 2 pour cent; et/ou
(ii) un maximum de la cambrure de la surface supérieure (211, 311) est situé là où est située l'épaisseur maximale.

4. Giravion de l'une quelconque des revendications 1 à 3, dans lequel la source de couple est un moteur électrique ; ou dans lequel la source de couple est un moteur.

5. Giravion d'une quelconque revendication précédente, comprenant en outre :
un deuxième système de rotor de queue (109, 407, 409, 507, 509, 607, 707, 709) comprenant :
des pales de rotor bidirectionnelles (103, 201, 301, 423, 425, 427, 429) avec un pas fixe; et
une deuxième source de couple configurée pour faire tourner le deuxième système de rotor de queue (109, 407, 409, 507, 509, 607, 707, 709) ;
dans lequel une vitesse de rotation de la deuxième source de couple est variable ; et
dans lequel une direction de rotation du deuxième système de rotor de queue (109, 407, 409, 507, 509, 607, 707, 709) peut être inversée en vol.

6. Giravion de la revendication 5, dans lequel :
(i) un diamètre du premier système de rotor de queue (407, 707) n'est pas égal à un diamètre du deuxième système de rotor de queue (409, 709) ; ou
(ii) dans lequel un diamètre du premier système de rotor de queue (507, 509, 607, 707, 709) est égal à un diamètre du deuxième système de rotor de queue (507, 509, 607, 707, 709).

7. Giravion de la revendication 5 ou de la revendication 6, comprenant en outre :
un troisième système de rotor de queue (109, 407, 409, 507, 509, 607, 707, 709) comprenant :
des pales de rotor bidirectionnelles (103, 201, 301, 423, 425, 427, 429) avec un pas fixe; et
une troisième source de couple configurée pour faire tourner le troisième système de rotor de queue (109, 407, 409, 507, 509, 607, 707, 709) ;
dans lequel le troisième système de rotor de queue (109, 407, 409, 507, 509, 607, 707, 709) a un pas fixe ;
dans lequel une vitesse de rotation du troisième système de rotor de queue (109, 407, 409, 507, 509, 607, 707, 709) est variable ; et
dans lequel une direction de rotation du troisième système de rotor de queue (109, 407, 409, 507, 509, 607, 707, 709) peut être inversée en vol.

8. Procédé de contrôle d'un moment de lacet d'un système de rotor de queue (109, 407, 409, 507, 509, 607, 707, 709) d'un giravion (101, 401), comprenant :
l'obtention d'un premier système de rotor de queue (109, 407, 409, 507, 509, 607, 707, 709) ayant :
un premier moyeu (121) ; et
une première pale de rotor de queue bidirectionnelle (103, 201, 301, 423, 425, 427, 429) fixée au premier moyeu (121) avec un pas fixe ;
la première pale de rotor de queue bidirectionnelle (103, 201, 301, 423, 425, 427, 429) étant symétrique autour d'un axe médian (219) de la première pale de rotor de queue bidirectionnelle (103, 201, 301, 423, 425, 427, 429), l'axe médian (219) étant situé à mi-chemin le long d'un axe de corde (217) entre un bord d'attaque (203, 303) de la première pale de rotor de queue bidirectionnelle (103, 201, 301, 423, 425, 427, 429) et un bord de fuite (205, 305) de la première pale de rotor de queue bidirectionnelle (103, 201, 301, 423, 425, 427, 429), et une épaisseur maximale de chacune des pales de rotor bidirectionnelles étant à mi-chemin entre le bord d'attaque et le bord de fuite ; et
la variation d'une vitesse de rotation du premier système de rotor de queue (109, 407, 409, 507, 509, 607, 707, 709).

9. Procédé de la revendication 8, comprenant en outre :
l'inversion d'une direction de rotation du premier système de rotor de queue (109, 407, 409, 507, 509, 607, 707, 709).

10. Procédé de la revendication 8 ou de la revendication 9, comprenant en outre :
l'obtention d'un deuxième système de rotor de queue (109, 407, 409, 507, 509, 607, 707, 709) ayant :
un deuxième moyeu (121) ; et
une deuxième pale de rotor de queue bidirectionnelle (103, 201, 301, 423, 425, 427, 429) fixée au deuxième moyeu (121) avec un pas fixe ;
la deuxième pale de rotor de queue bidirectionnelle (103, 201, 301, 423, 425, 427, 429) étant symétrique autour d'un axe médian (219) de la deuxième pale de rotor de queue bidirectionnelle (103, 201, 301, 423, 425, 427, 429), l'axe médian (219) étant situé à mi-chemin le long d'un axe de corde (217) entre un bord d'attaque (203, 303) de la deuxième pale de rotor de queue bidirectionnelle (103, 201, 301, 423, 425, 427, 429) et un bord de fuite (205, 305) de la deuxième pale de rotor de queue bidirectionnelle (103, 201, 301, 423, 425, 427, 429), et une épaisseur maximale de chacune des pales de rotor bidirectionnelles étant à mi-chemin entre le bord d'attaque et le bord de fuite ; et
la variation d'une vitesse de rotation du deuxième système de rotor de queue (109, 407, 409, 507, 509, 607, 707, 709).

11. Procédé de la revendication 10, comprenant en outre :
l'inversion d'une direction de rotation du deuxième système de rotor de queue (109, 407, 409, 507, 509, 607, 707, 709).

12. Procédé de la revendication 10 ou de la revendication 11, dans lequel le premier système de rotor de queue (109, 407, 409, 507, 509, 607, 707, 709) est contrôlé simultanément au deuxième système de rotor de queue (109, 407, 409, 507, 509, 607, 707, 709).

13. Procédé de la revendication 10 ou de la revendication 11, dans lequel le premier système de rotor de queue (109, 407, 409, 507, 509, 607, 707, 709) est contrôlé indépendamment du deuxième système de rotor de queue (109, 407, 409, 507, 509, 607, 707, 709).
